# EUROPEAN PATENT APPLICATION

(11) **EP 2 295 353 A1**
(43) Date of publication of application: **16.03.2011**
(21) Application number: 10176469.4
(22) Date of filing: 13.09.2010
(51) Int. Cl.: B65G 47/91, B65G 61/00, B29C 49/42, B65B 35/38

(54) **Method and apparatus for picking up and carrying preforms from bulk transport**

(30) Priority: 14.09.2009 IT PR20090070
(71) Applicant: Lanfranchi S.R.L., 43044 Collecchio (Parma) (IT)
(72) Inventor: LANFRANCHI, MARIO, 43044, COLLECCHIO (PARMA) (IT)
(74) Representative: Dallaglio, Fabrizio

(57) **Abstract**

A method and apparatus for picking up and carrying preforms (11) from bulk transport on a belt (12) and carrying said preforms into a container (13) in orderly fashion, **characterized in that** it comprises at least:
e. shooting a series of images of the conveyor belt with the bulk preforms thereon, by means of one or more vision systems (14) located adjacent to the belt and the pick-up area for a first handling means (15); said snapshot being taken prior to picking up by the means (15),
f. communicating the actual position of the preforms (11) on the belt (12) to said first handling means (15), to allow definition of the pick-up spatial coordinates of one of the preforms (11) that have been viewed,
g. picking up said preform
h. intermediately stopping the preform on a rack (16) that has a plurality of housings corresponding to the preform size;
i. picking up the preforms (11) from said rack (16) by means of a second handling means (17) with at least one suction gripping head;
j. depositing said preforms into an appropriate container.

## Description

### FIELD OF THE INVENTION

The present invention finds application in the field of systems for handling and conveying preforms for plastic containers, and namely relates to a method and an apparatus for picking up and carrying said preforms from bulk transport.

The applicant hereof has already developed an apparatus and a method for picking up and carrying preforms, but the basic condition to perform the method was having the preforms orderly arranged, e.g. picked up by the preform forming machine.

The object of the present invention is to indiscriminately pick up preforms in bulk arrangement on a conveyor belt. In prior art, preforms so arranged are required to be handled and picked up by an operator, who would introduce them into special cardboard containers; with the present method and apparatus, the pick-up process may be automated with the series of checks being performed on the preforms from the conveyor belt, and the acquired parameters may be communicated to a first handling robot, which transfers the object to a rack, whereupon a second anthropomorphic handling robot, having a suction gripping head, loads the objects so arranged and carries them to the appropriate container.

The rack comprises means with carriers for aligning the deposited objects and unscrambling the row of preforms to be introduced into the cardboard box, for further space optimization.

The advantages achieved by the present method and apparatus may be summarized in terms of operation savings, as the whole process is carried out autonomously by a robotized system which requires no assistance by the operator.

These objects and advantages are achieved by the method and apparatus for picking up and carrying said preforms from bulk transport, according to the present invention, which are characterized by the annexed claims.

### BRIEF DESCRIPTION OF THE FIGURES

This and other features will be more apparent from the following description of a few embodiments, which are shown by way of example and without limitation in the accompanying drawings.

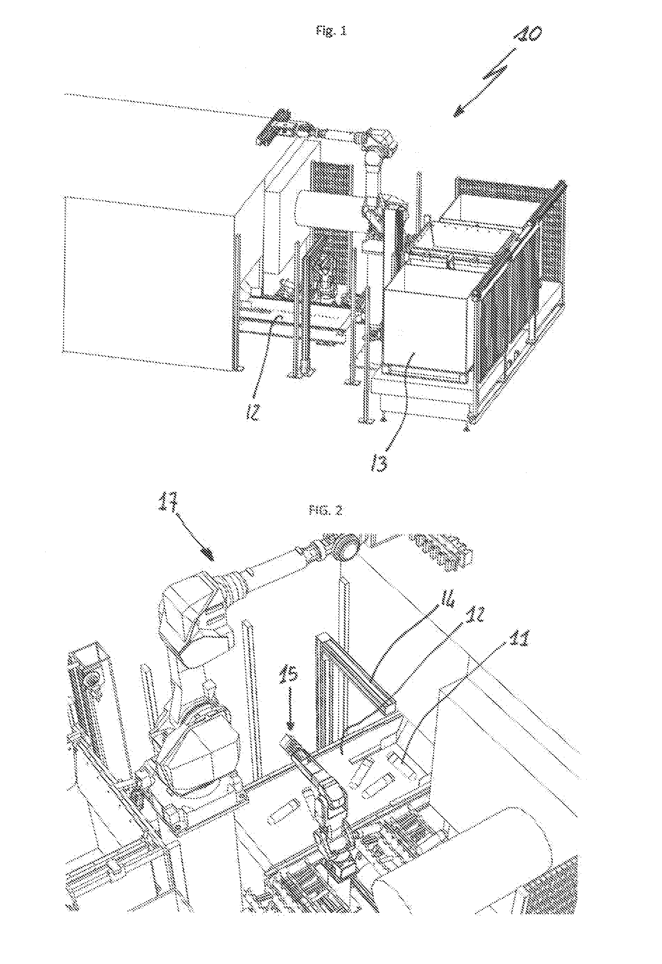

- Figure 1: a general view of the system comprising two handling robots and an optical vision means
- Figure 2: a detailed view of the preform pick-up area on the conveyor belt

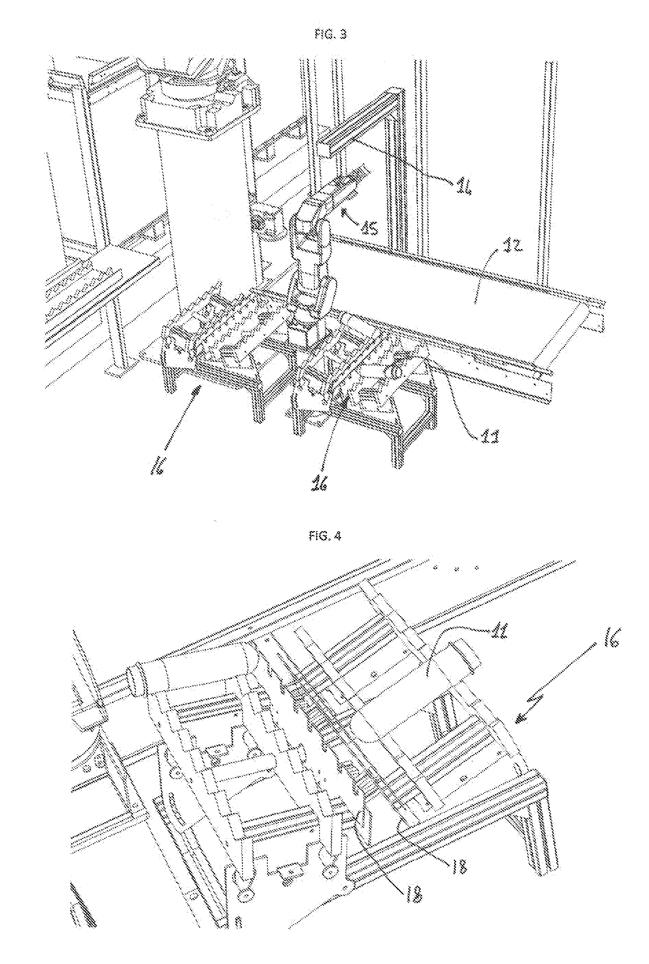

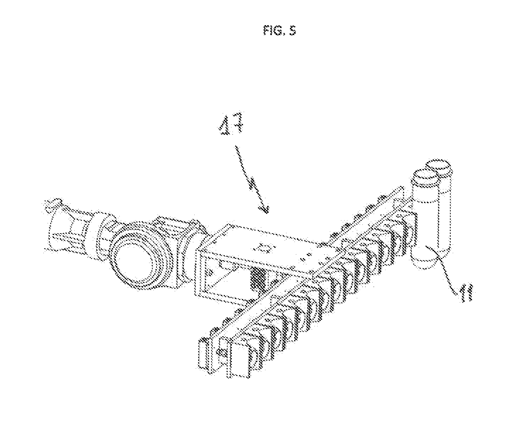

- Figure 3: a detailed view of the area on the racks on which the preforms picked up from the belt are laid
- Figure 4: the gripping head of the second handling robot, adapted to pick up and orderly deposit the preforms into an appropriate container.

### DESCRIPTION OF THE INVENTION

Particularly referring to the above figures, numeral 10 generally designates an apparatus for handling and unscrambling preforms 11 arranged in bulk on a conveyor belt 12 or an equivalent conveyor system.

The apparatus 10 allows bulk preforms to be picked up, aligned and deposited into the appropriate container, designated by numeral 13 in the Figure.

The operation method includes shooting a continuous series of images of the belt with the preforms thereon in bulk, i.e. in random arrangements; images are acquired by a vision system 14 located on a support structure, above the belt and adjacent to the pick-up area for a first handling means 15; the method includes taking a snapshot a few instants prior to pick-up and communicating the actual position of the preforms 11 on the belt 12 to said first handling means 15, to allow unique definition of the proper pick-up position of the detected preform 11.

After pick-up, the preform is intermediately stopped on a rack 16 that has a plurality of housings corresponding to the preform size; once the rack 16 has been loaded, a second handling means 17 having a suction gripping head picks up the preforms from the rack 16 and deposits them into an appropriate container. Eech pick-up action by the first means is preceded by a snapshot of the actual situation on the belt, which allows preform mapping and provides correct spatial coordinates for pick-up to occur by means of a vacuum-operated preform gripping system or by grippers or equivalent means.

The vision means 14 may be a camera or multiple equivalent systems with lenses.

The rack 16 has a sliding compaction abutment 18 for moving all the preforms to the same line and prevent misalignment thereof.

The preforms so picked up are introduced into the cardboard box, deposited by the means 17 and laid therein to form two opposite adjacent rows. While reference has been made herein to a cardboard box, the method may be also implemented using instead containers of other materials and shapes.

## Claims

1. A method for picking-up and carrying preforms (11) in bulk conditions from a belt (12) and carrying said preforms to a container (13) in an ordered manner, **characterized in that** it provides at least:
a. shooting a series of images of the belt with the bulk preforms arranged thereon by means of one or more vision systems (14) that are placed adjacent to the belt and pick-up area of a first handling means (15); said snapshot being acquired before the picking-up action is carried out by the means (15),
b. communicating the actual position of the preforms (11) on the belt (12) to said first handling means (15) such as to be capable of defining the pick-up space coordinates of one of the preforms (11) that have been viewed,
c. picking-up said preform (11) and
d. intermediately stopping the preform on a rack (16) carrying a plurality of housings corresponding to the preform size;
e. picking-up the preforms (11) from said rack (16) by means of a second handling means (17) with at least one suction gripping head
f. depositing said preforms within a suitable container.

2. An apparatus (10) for picking-up and carrying preforms (11) from a belt (12) in bulk conditions and carrying said preforms to a container (13) in an ordered manner, **characterized in that** it comprises at least
a. a vision system (14) situated above said belt (12) and adjacent to the pick-up area
b. a first handling means (15) capable of picking-up the preforms from said belt (12); for picking-up the preform (11) being detected,
c. at least one rack (16) carrying a plurality of housings corresponding to the preform size;
d. a second handling means (17) carrying a suction gripping head which provides to pick-up the preforms from the rack (16) and arrange them within the container (13).
